# EUROPEAN PATENT APPLICATION

(11) **EP 2 256 367 A1**
(43) Date of publication of application: **01.12.2010**
(21) Application number: 10163606.6
(22) Date of filing: 21.05.2010
(51) Int. Cl.: F16G 11/14, F16G 11/10

(54) **Adapter for attachment to an elastic cord**

(30) Priority: 22.05.2009 NL 2002914
(71) Applicant: Iac B.V., 3771 HW Barneveld (NL); Eureka PD&E BvbA, 2440 Geel (BE)
(72) Inventor: Boonstra, Dirk, 3771 HW, Barneveld (NL); van Lieshout, Steven, 2440, Geel (BE)
(74) Representative: Verhees, Godefridus Josephus Maria

(57) **Abstract**

An adapter 1 comprises a body 3 which has a hole 5 in it, in which the end of an elastic cord 7 is fastened. The adapter 1 has two hooks 11 which are each attached with a first end 11a to the body 3 and of which the other, second end 11b forms a free tip. The two hooks 11 are positioned in parallel with each other and distant from each other, the first end 11a of one hook being positioned near the second end 11b of the other hook.

The adapter 1 further comprises a groove 13 provided in the body 3, which groove has an in essence Ω-shaped cross section, and also comprises on the body 3 protuberances 15 also having an in essence Ω-shaped cross section which can be slotted into a groove of a further adapter or accessory. By means of this groove and protuberances the adapter can be coupled to further adapters or accessories.

## Description

### Field of the invention.

The invention relates to a adapter for attachment to an elastic cord for coupling accessories to the elastic cord, comprising a body which at one end has a hole into which the end of the elastic cord can be stuck and fastened and at the opposite further end is provided with coupling means to which accessories can be coupled.

### State of the art.

An adapter of this type is known from EP-A-1906031. In this known adapter the coupling means are formed as a hook to which accessories can be coupled.

### Summary of the invention.

It is an object of the invention to improve the known adapter. To this end the adapter according to the invention is **characterised in that** one side of the body is provided with a first groove open at one end and closed at the other, which first groove has an in essence Ω-shaped cross section, and a further, opposite side is provided with a first protuberance also having an Ω-shaped cross section which can be slotted into a groove of a further adapter. By means of this groove or this protuberance it is possible for adapters to be mutually coupled or the adapter to be coupled to a coupling element that is provided with such a groove or protuberance. The advantage of this is that various adapters can be coupled together without the need to use additional coupling elements for this purpose.

An embodiment of the adapter according to the invention is **characterised in that** coupling means are provided with a second groove open at one end and closed at the other, or a second protuberance having an in essence Ω**-**shaped cross section. This further end is preferably beveled and from the one side it follows an oblique path to the further side so as to minimize the chance of the coupling coming loose when coupled to a further adapter or to an accessory.

The invention likewise relates to a combination of an adapter according to the invention and an accessory. With respect to this combination, the invention is **characterised in that** the accessory is formed by an eye which is provided with a third groove open at one end and closed at the other, or a third protuberance, which third groove or which third protuberance can be coupled to the coupling means.

A further embodiment of the combination according to the invention is **characterised in that** the eye at a location opposite to the third groove or the third protuberance is provided with a fourth groove open at one end and closed at the other or a fourth protuberance, which fourth groove or which fourth protuberance can also be coupled to the coupling means.

Yet a further embodiment of the adapter according to the invention is **characterised in that** the coupling means comprise two hooks of which a first end is attached to the body and of which the other, second end forms a free tip, and which hooks are positioned in parallel with each other and distant from each other, the first end of one hook being positioned near the second end of the other hook. An accessory having an eye can be firmly coupled to the adapter by first sliding the eye between the two hooks and then turning it a quarter of a turn, so that the eye will be lodged behind the two hooks.

Another embodiment of the combination of the adapter and an accessory is **characterised in that** the accessory is formed by a flexible elongated binding element which at one end is provided with a groove open at one end and closed at the other and having an in essence Ω-shaped cross section for coupling to the protuberance of the adapter, and at the other end is provided with a protuberance also having an in essence Ω-shaped cross section for coupling to the groove of the adapter. This elongated flexible binding element forms a strap that can be wound around a tube so as to couple the adapter to the tube.

Yet another embodiment of the combination of the adapter and an accessory is **characterised in that** the accessory is formed by a coupling element that has two holes near one end for coupling to the adapter hooks, which coupling element further has a central hole and a plurality of ribs positioned in a V-shape with an interruption in the middle of the ribs, where a cord can be clamped in position between the ends of the ribs facing one another in the place of the interruption. The ribs then function as beards holding back the cord clamped between them if the cord is pulled. In this way a cord can be simply clamped between the ribs at any desired position.

Yet again another embodiment of the combination of the adapter and an accessory is **characterised in that** the accessory is formed by a hook provided with a groove which is open at one end and closed at the other and having an in essence Ω-shaped cross section for coupling to the protuberance of the adapter and/or a protuberance also having an in essence Ω-shaped cross section for coupling to the groove of the adapter.

Still another embodiment of the combination of the adapter and an accessory is **characterised in that** the adapter has a cylindrical part which has lugs on the cylinder wall and the accessory has a cylindrical hole with recesses in the inner wall so that the lugs together with the recesses form a bayonet catch.

In an embodiment of the latter, the accessory is formed by a finger hook that includes a coupling element in which the hole with the recesses are found.

### Brief description of the drawings.

The invention will now be described in more detail based on embodiments of the adapter and the accessories according to the invention represented in the drawings. Herein:
Fig. 1 shows a perspective view of a first embodiment of the adapter according to the invention with a cord attached to it;
Fig. 2 shows a front view of the adapter shown in Fig. 1;
Fig. 3 shows the adapter coupled to a wire hook provided with an eye;
Fig. 4 shows the adapter coupled to a carbine hook;
Fig. 5 shows a plurality of adapters coupled to one another;
Fig. 6 shows a combination of the adapter and a coupling element during the coupling of the two items;
Fig. 7 shows the combination shown in Fig. 6 in coupled state;
Fig. 8 shows an accessory formed as a hook;
Fig. 9 shows the hook shown in Fig. 8 coupled to the adapter;
Fig. 10 shows an accessory formed as a finger hook;
Fig. 11 shows the finger hook shown in Fig. 10 coupled to the adapter;
Fig. 12 shows an accessory formed as a binding element;
Fig. 13 shows the binding element shown in Fig. 12 coupled to the adapter;
Fig. 14 shows a perspective view of a second embodiment of the adapter according to the invention;
Fig. 15 shows the adapter shown in Fig. 14 from another viewing angle;
Fig. 16 shows the adapter coupled to an accessory formed as a finger hook;
Fig. 17 shows the accessory formed as a finger hook;
Fig. 18 shows the adapter coupled to an accessory formed as an eye;
Fig. 19 shows the accessory formed as an eye;
Fig. 20 shows the adapter coupled to a further accessory formed as an eye; and
Fig. 21 shows the further accessory formed as an eye.

### Detailed description of the drawings

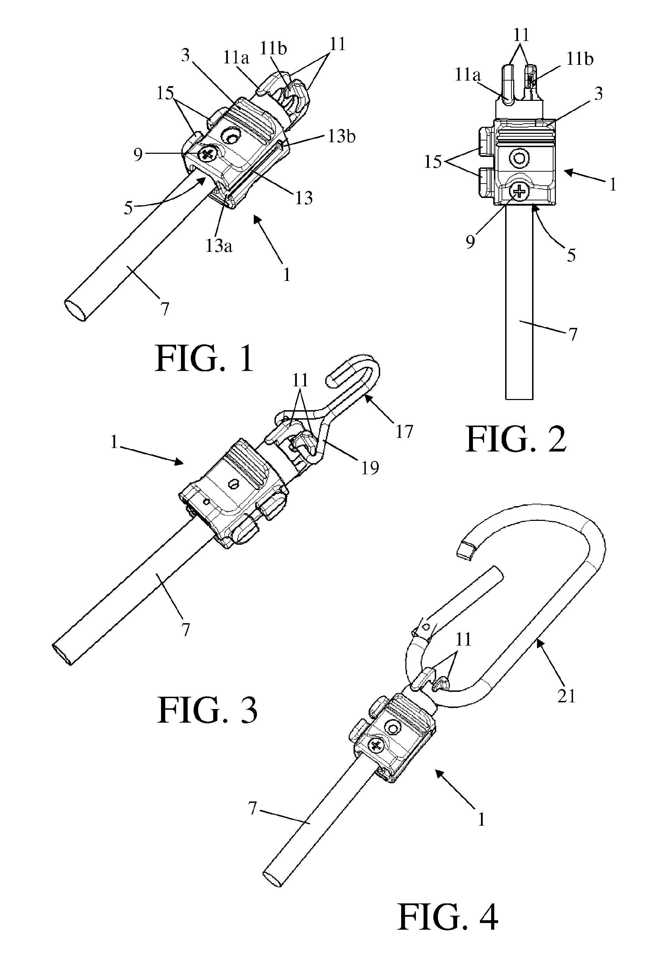

Figs. 1 and 2 show a perspective view and front view respectively of a first embodiment of the adapter according to the invention with a cord attached thereto. The adapter 1 comprises a body 3 provided with a hole 5, into which the end of an elastic cord 7 is stuck which is tightened by means of a screw 9. The adapter 1 has two hooks 11 which are each attached to the body 3 with a first end 11a and of which the other, second end 11b forms a free tip. The two hooks 11 are positioned distant from each other and in parallel with each other, where the first end 11a of one hook is positioned close to the second end 11b of the other hook.

The adapter 1 further has a groove 13 positioned inside the body 3 and open at one end 13 and closed at the other 13b, having an in essence Ω-shaped cross section, as well as two protuberances 15 positioned on the body 3 and also having an in essence Ω-shaped cross section which can be slotted into a groove of a further adapter or accessory. By means of this groove and protuberances the adapter can be coupled to further adapters or accessories.

In Fig. 3 the adapter 1 is coupled to a wire hook 17 which has an eye 19. The eye 19 of the wire hook is then first stuck between the two hooks 11 and then turned a quarter of a turn, so that it has ended up behind the hooks 11.

Fig. 4 shows the adapter 1 coupled to a carbine hook 21. The two hooks 11 function here as an eye to which the carbine hook is coupled. This coupling is realised by opening the carbine hook and not, like the situation shown in Fig. 3, by sticking the carbine hook between the two hooks 11 and turning it then a quarter of a turn.

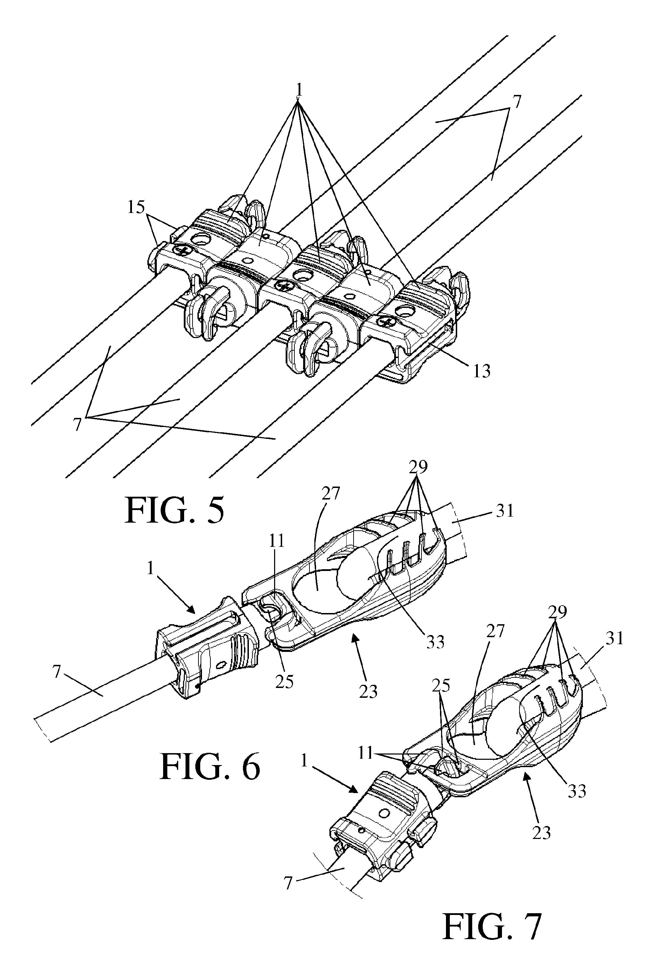

Fig. 5 shows a plurality of adapters 1 coupled to one another where the protuberances 15 are slotted into the grooves 13.

Figs. 6 and 7 show a combination of the adapter 1 and a coupling element 23 during the coupling of the two, and in coupled state respectively. The coupling element 23 has two holes 25 near one end, for coupling to the hooks 11 of the adapter 1. The coupling element 25 further has a central hole 27 and a plurality of ribs 29 positioned in a V shape. The V-shaped ribs 29 are interrupted in the middle, so that the cord 31 in the place of the interruption 33 can be clamped in position between the ends of the ribs 29, which ends are facing one another.

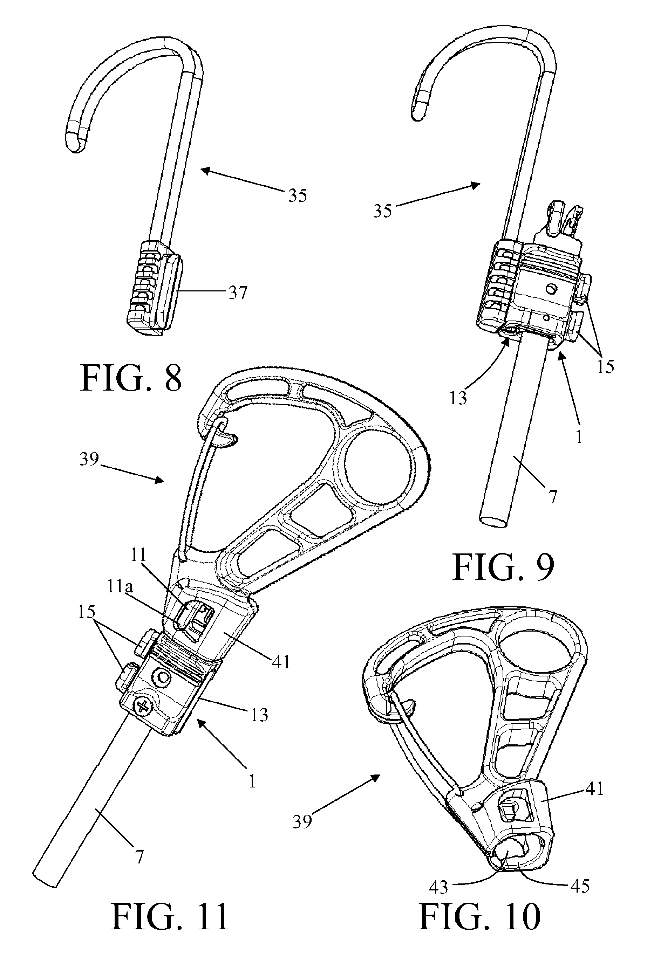

Fig. 8 shows an accessory formed as a hook 35 and Fig. 9 shows a combination of the adapter 1 and the hook 35 coupled to it. The hook 35 is provided with a protuberance 37 which has an Ω-shaped or T-shaped cross section for coupling to the groove 13 provided in the adapter 1.

Fig. 10 shows an accessory formed as a finger hook 39 and Fig. 11 shows a combination of the adapter 1 and the finger hook 39 coupled to it. The finger hook 39 has a coupling element 41 that has a hole 43 that fits around the hooks 11 of the adapter 1. The first ends 11a of the hooks 11 form lugs that correspond to recesses 45 present on the inside of the boundary wall of the hole 43 and thus together form a bayonet catch.

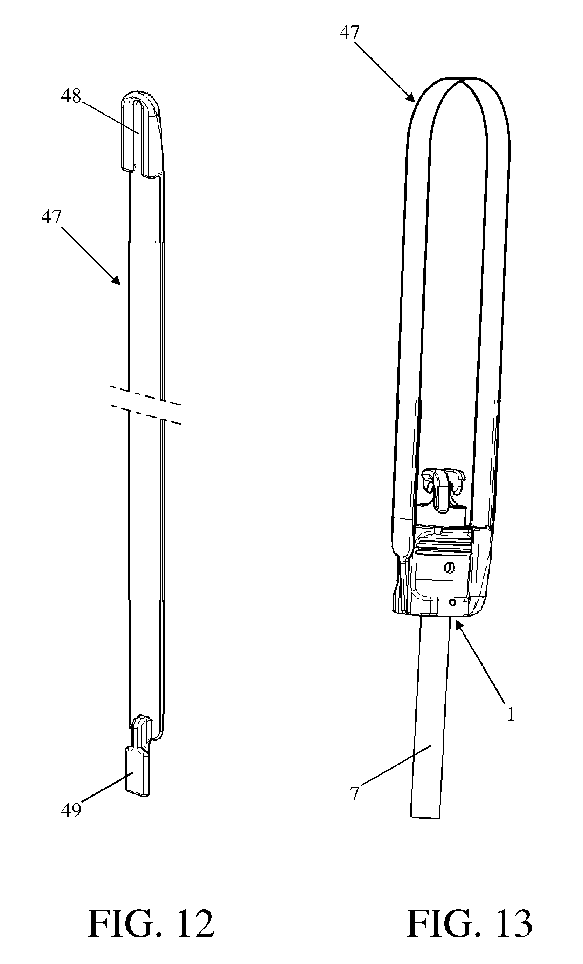

Fig. 12 shows an accessory formed as a binding element 47 and Fig. 13 shows a combination of the adapter 1 and the binding element 47 connected to it. The binding element 47 has at one end a groove 48 which has an in essence Ω-shaped cross section and which is open at one end and closed at the other and is intended to be coupled to the protuberance of the adapter 1. At the other end the binding element 47 has a protuberance 49 which also has an Ω-shaped cross section for coupling to the groove of the adapter 1.

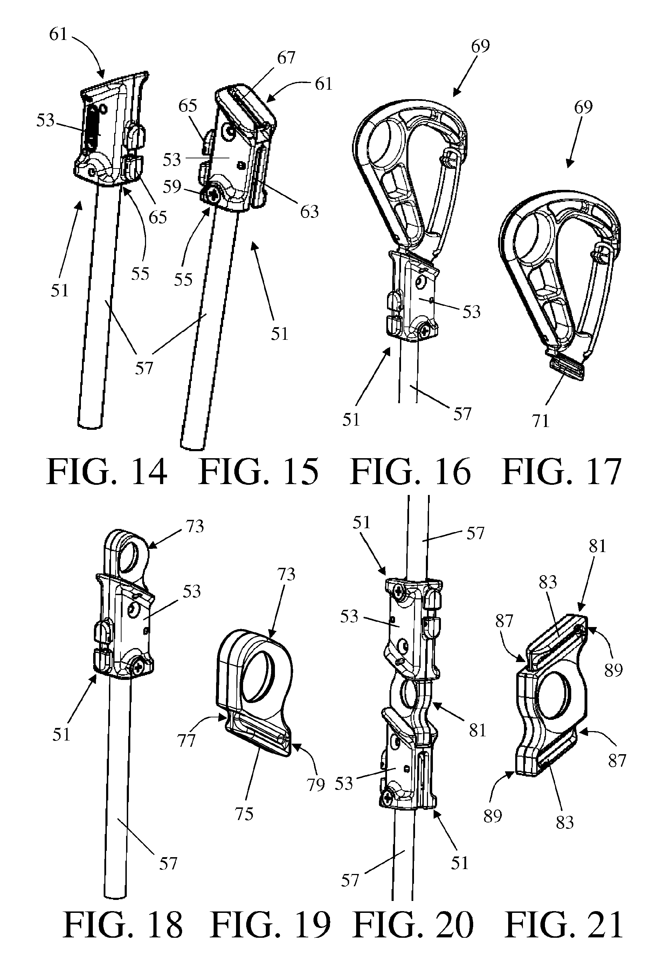

Figs. 14 and 15 show in a perspective view a second embodiment of the adapter according to the invention. This adapter 51 too comprises a body 53 which at one end 55 has a hole into which the end of an elastic cord 57 is stuck and fastened with a screw 59. At the opposite, further side 61 the body is provided with coupling means to which accessories can be coupled.

Here too, one side of the body is provided with a first groove 63 open at one end and closed at the other and having an in essence Ω-shaped cross section, and a further side positioned opposite to it is provided with a protuberance 65 also having an in essence Ω-shaped cross section which can be slotted into a groove of a further adapter.

In this adapter 51 the coupling means are formed by a second groove 67 open at one end and closed at the other and also having an in essence Ω-shaped cross section. The further end 61 is beveled and follows an oblique path from one side to the further side.

In Figs. 16 and 17 is shown the adapter 51 coupled to an accessory formed as a finger hook 69 and also the finger hook 69 as such is shown. The finger hook comprises a coupling section which is formed by a protuberance 71 which has an in essence Ω-shaped cross section.

In Figs. 18 and 19 is shown the adapter 51 coupled to an accessory formed as an eye 73 and also the eye 73 as such is shown. The eye comprises a coupling section which is formed by a third protuberance 75 which has an in essence Ω-shaped cross section, which can be coupled to the coupling means. The grooves in the side walls of the protuberance 75 are open at one end 77 and closed at the other end 79.

In Figs. 20 and 21 is shown the adapter 51 coupled to a further accessory formed as an eye 81 and also the further eye 81 as such is shown. At two locations facing each other the eye has protuberances 83 which have an in essence Ω-shaped cross section. The grooves in the side walls of the protuberances 83 here too are open at one end 87 and closed at the other end 89.

Albeit the invention has been described in the foregoing with reference to the drawings, it should be observed that the invention is not by any manner or means restricted to the embodiments shown in the drawings. The invention also extends to all embodiments deviating from the embodiments shown in the drawings within the spirit and scope defined by the claims.

## Claims

1. An adapter for attachment to an elastic cord for coupling accessories to the elastic cord, comprising a body which at one end has a hole into which the end of the elastic cord can be stuck and fastened and at the opposite further end is provided with coupling means to which accessories can be coupled, **characterised in that** one side of the body is provided with a first groove open at one end and closed at the other, which first groove has an in essence Ω-shaped cross section, and a further, opposite side is provided with a first protuberance also having an Ω-shaped cross section which can be slotted into a groove of a further adapter.

2. An adapter as claimed in claim 1, **characterised in that** coupling means are provided with a second groove open at one end and closed at the other, or a second protuberance having an in essence Ω-shaped cross section.

3. An adapter as claimed in claim 2, **characterised in that** the further end is beveled and follows an oblique path from the one side to the further side.

4. A combination of an adapter as claimed in claim 2 or 3 and an accessory, **characterised in that** the accessory is formed by an eye which is provided with a third groove open at one end and closed at the other, or a third protuberance, which third groove or which third protuberance can be coupled to the coupling means.

5. A combination as claimed in claim 4, **characterised in that** the eye at a location opposite to the third groove or the third protuberance is provided with a fourth groove open at one end and closed at the other, or a fourth protuberance, which fourth groove or which fourth protuberance can also be coupled to the coupling means.

6. An adapter as claimed in claim 1, **characterised in that** the coupling means comprise two hooks of which a first end is attached to the body and of which the other, second end forms a free tip, and which hooks are positioned in parallel with each other and distant from each other, the first end of one hook being positioned near the second end of the other hook.

7. A combination of an adapter as claimed in claim 1, 2, 3 or 6 and an accessory, **characterised in that** the accessory is formed by a flexible elongated binding element which at one end is provided with a groove open at one end and closed at the other and having an in essence Ω-shaped cross section for coupling to the protuberance of the adapter, and at the other end is provided with a protuberance also having an in essence Ω-shaped cross section for coupling to the groove of the adapter.

8. A combination of an adapter as claimed in claim 6 and an accessory, **characterised in that** the accessory is formed by a coupling element that has two holes near one end for coupling to the adapter hooks, which coupling element further has a central hole and a plurality of ribs positioned in a V-shape with an interruption in the middle of the ribs, where a cord can be clamped in position between the ends of the ribs facing one another in the place of the interruption.

9. A combination of an adapter as claimed in claim 1, 2, 3 or 6 and an accessory, **characterised in that** the accessory is formed by a hook provided with a groove which is open at one end and closed at the other and having an in essence Ω-shaped cross section for coupling to the protuberance of the adapter, and/or a protuberance also having an in essence Ω-shaped cross section for coupling to the groove of the adapter.

10. A combination of an adapter as claimed in claim 1, 2, 3 or 6 and an accessory, **characterised in that** the adapter has a cylindrical part which has lugs on the cylinder wall and the accessory has a cylindrical hole with recesses in the inner wall so that the lugs together with the recesses form a bayonet catch.

11. A combination of an adapter and an accessory as claimed in claim 10, **characterised in that** the accessory is formed by a finger hook that includes a coupling element in which the hole with the recesses are found.
